# EUROPÄISCHE PATENTSCHRIFT

(11) **EP 3 210 720 B1**
(45) Veröffentlichungstag und Bekanntmachung des Hinweises auf die Patenterteilung: **02.05.2018**
(21) Anmeldenummer: 17154736.7
(22) Anmeldetag: 06.02.2017
(51) Int. Cl.: B24B 19/12, B24B 35/00, B24B 5/42, B24B 41/06, B24B 41/00

(54) **FINISHVORRICHTUNG**
FINISHING DEVICE
FINISSEUSE

(30) Priorität: 23.02.2016 DE 102016103105
(43) Veröffentlichungstag der Anmeldung: 30.08.2017
(73) Patentinhaber: Supfina Grieshaber GmbH & Co. KG, 77709 Wolfach (DE)
(72) Erfinder: Seger, Martin, 77709 Wolfach (DE)
(74) Vertreter: DREISS Patentanwälte PartG mbB

(56) Entgegenhaltungen:
- DE-A1- 10 016 897
- DE-A1-102009 059 897
- DE-A1-102014 204 807

## Beschreibung

Die Erfindung betrifft eine Finishvorrichtung, mit einer Werkstückaufnahmeeinrichtung, einem Rotationsantrieb zum rotatorischen Antrieb eines Werkstücks um eine Werkstückachse, einem Oszillationsantrieb zur Erzeugung einer Relativbewegung zwischen Werkstück und einem Finishwerkzeug in einer zu der Werkstückachse parallelen Richtung, mit einer Werkstücktransporteinrichtung, die einen Werkstückhalter aufweist, der mittels einer Antriebseinrichtung zwischen einer Arbeitsposition zur Bearbeitung eines Werkstücks und einer Be-/Entladeposition zur Bereitstellung eines zu bearbeitenden Werkstücks und zur Entnahme eines bearbeiteten Werkstücks bewegbar ist, wobei der Werkstückhalter eine Auflageeinrichtung zur Auflage eines Werkstücks aufweist.

Finishvorrichtungen dienen zur finishenden Bearbeitung von Werkstücken, beispielsweise von Kurbelwellen oder Nockenwellen. In Umfangsrichtung rotationssymmetrische Lagerflächen dieser Werkstücke werden finishend bearbeitet, indem das Werkstück um eine Rotationsachse rotierend angetrieben wird. Gleichzeitig erfolgt eine Oszillationsbewegung in zu der Rotationsachse paralleler Richtung zwischen dem Finishwerkzeug (beispielsweise einem Finishstein oder einem Finishband) und dem finishend zu bearbeitenden Werkstück. Im Wege der Finishbearbeitung eines Werkstücks wird eine für das Finishverfahren charakteristische Kreuzschliffstruktur erzeugt.

Während der Bearbeitung eines Werkstücks ist dieses in einer Bearbeitungsposition angeordnet. In dieser Bearbeitungsposition ist das Werkstück in einer Werkstückaufnahmeeinrichtung eingespannt. Üblicherweise weist diese Spannelemente auf, die entlang der Werkstückachse gesehen auf einander gegenüberliegenden Seiten angeordnet sind. Beispielsweise können konische Spitzen in entsprechende Vertiefungen eingreifen, die in den Stirnflächen des Werkstücks vorgesehen sind.

Zum Transport des Werkstücks zwischen einer Arbeitsposition und einer Be-/Entladeposition ist eine Werkstücktransporteinrichtung vorgesehen. In der Be-/Entladeposition werden finishend zu bearbeitende Werkstücke bereitgestellt, und dann mittels der Werkstücktransporteinrichtung in die Arbeitsposition verbracht. Aus der Arbeitsposition heraus wird das Werkstück mittels der vorstehend beschriebenen Werkstückaufnahmeeinrichtung in die Bearbeitungsposition überführt und dort finishend bearbeitet. Anschließend wird das Werkstück durch Lösen der Werkstückaufnahmeeinrichtung wieder in die Arbeitsposition verbracht und von dort mittels der Werkstücktransporteinrichtung zurück in die Be-/Entladeposition verbracht.

Die Positionsänderung des Werkstücks im Zuge des Wechsels zwischen der Arbeitsposition und der Bearbeitungsposition ist relativ gering und entspricht einem Versatz von wenigen Millimetern oder Zentimetern zwischen der Werkstückachse des auf der Auflageeinrichtung aufliegenden Werkstücks und einer Spannachse der Werkstückaufnahmeeinrichtung.

Aus Vorbenutzungen der Anmelderin sind Finishvorrichtungen mit Werkstücktransporteinrichtungen bekannt, die einen Werkstückhalter mit einer Auflageeinrichtung zur Auflage eines Werkstücks aufweisen. Bei den bekannten Werkstücktransporteinrichtungen wird der Werkstückhalter zwischen der Be-/Entladeposition und der Arbeitsposition entlang eines mehrstufigen Transportwegs bewegt. Beispielsweise wird ein finishend zu bearbeitendes Werkstück aus der Be-/Entladeposition in die Arbeitsposition verbracht, indem die Auflageeinrichtung des Werkstückhalters zunächst entlang eines ersten Transportpfads bewegt wird, bis sich die Auflageeinrichtung mit dem Werkstück unterhalb der Arbeitsposition befindet. Hiervon ausgehend wird die Auflageeinrichtung gemeinsam mit dem finishend zu bearbeitenden Werkstück nach oben bewegt, bis der Werkstückhalter die Arbeitsposition erreicht hat. Aus dieser Arbeitsposition heraus wird das Werkstück mittels der Werkstückaufnahmeeinrichtung eingespannt. Anschließend wird der Werkstückhalter von dem eingespannten Werkstück entfernt, indem der Werkstückhalter zunächst entlang des vorstehend genannten zweiten Transportpfads nach unten abgesenkt und von dort aus entlang des ersten Transportpfads zurück in die Be-/Entladeposition verbracht wird.

Der vorstehend beschriebene, mehrstufige Transportweg wird auch zum Abtransport des Werkstücks aus der Arbeitsposition in die Entladeposition benötigt.

Aus der DE 10 2011 081 918 A1 ist eine Finishvorrichtung mit den Merkmalen des Oberbegriffs des Patentanspruchs 1 bekannt, wobei die Finishvorrichtung einen Rundtisch aufweist, auf dem Werkstückaufnahmeeinrichtungen zum Einspannen von Werkstücken angeordnet sind. Durch Drehung des Rundtischs sind die in den Werkstückaufnahmeeinrichtungen eingespannten Werkstücke zwischen verschiedenen Positionen verlagerbar. Ferner ist eine Beschickungseinrichtung zur Beschickung der Finishvorrichtung mit Werkstücken vorgesehen.
Aus der DE 10 2009 059 897 A1 ist eine nicht gattungsgemäße Rundschleifmaschine zum Schälschleifen von langen, dünnen Rundstangen bekannt, mit einem Vorablageprisma, das einen Längsanschlag für das Ende einer Rundstange aufweist. Hiervon ausgehend liegt der vorliegenden Erfindung die Aufgabe zugrunde, eine Finishvorrichtung anzugeben, welche einen möglichst schnellen und einfachen Werkstücktransport ermöglicht.
Diese Aufgabe wird durch eine Finishvorrichtung mit den den Merkmalen des Patentanspruchs 1 gelöst.
Erfindungsgemäß weist die Werkstücktransporteinrichtung der Finishvorrichtung einen Schwenkantrieb auf, mittels welchem der Werkstückhalter entlang eines lediglich einstufigen Transportwegs bewegt wird, nämlich entlang eines bogenförmigen Verschwenkwegs. Der bogenförmige Verschwenkweg ermöglicht es, einen raumgreifenden ersten Transportpfad und einen zweiten Transportpfad, der dem Freifahren oder dem Anlegen der Auflageeinrichtung an das Werkstück dient, in einer einstufigen Bewegung miteinander kombinieren zu können.

Die Ausbildung der Antriebseinrichtung als Schwenkantrieb ermöglicht eine schnelle und einfache Ansteuerung der Werkstücktransporteinrichtung. Bei dieser müssen lediglich die beiden Endpositionen, also die Arbeitsposition bzw. die Be-/Entladeposition angefahren und entsprechend gesteuert werden. Steuerzeiten, die bei einem mehrstufigen Transportpfad entstehen, können vermieden werden.

Im Rahmen der Erfindung ist es möglich, dass der Schwenkantrieb über eine konstruktiv ausgebildete Schwenkachse verfügt, dass also der Werkstückhalter mit der Auflageeinrichtung an einem Schwenkarm gehalten ist, welcher an einer konstruktiv ausgebildeten Schwenkachse gelagert ist und dort beispielsweise mittels einer auf den Schwenkarm wirkenden Antriebseinrichtung angetrieben ist.

Es ist im Rahmen der Erfindung aber auch möglich, dass die Schwenkachse nicht konstruktiv ausgebildet ist, sondern dass der bogenförmige Verschwenkweg durch eine Führung vorgegeben ist, entlang welcher der Werkstückhalter zwischen der Arbeitsposition und der Be-/Entladeposition verschoben wird.

Unabhängig davon, ob die vorstehend beschriebene Schwenkachse konstruktiv ausgebildet ist oder lediglich einer virtuellen Schwenkachse einer bogenförmigen Führung entspricht, ist es bevorzugt, wenn eine dem Verschwenkweg zugeordnete Schwenkachse in horizontaler Richtung gesehen seitlich versetzt zu dem Verschwenkweg angeordnet ist. Auf diese Weise können einstufige, bogenförmige Verschwenkwege realisiert werden, bei einer gleichzeitig relativ stark ausgeprägten Schalenform der Auflageeinrichtung, wodurch ein schwerkraftunterstützter, sicherer Halt des Werkstücks in der Auflageeinrichtung entlang des gesamten Verschwenkwegs gewährleistet ist.

Eine geometrisch günstige Anordnung ergibt sich dadurch, dass die Arbeitsposition bezogen auf die Schwerkraftrichtung höher als die Be-/Entladeposition angeordnet ist.

Ein besonders guter Halt des Werkstücks an dem Werkstückhalter ergibt sich dadurch, dass die Auflageeinrichtung in Form einer bezogen auf die Schwerkraftrichtung nach oben zumindest teilweise offenen Schale gebildet ist.

Erfindungsgemäß weist die Schale ein V-förmiges Profil auf. Das Werkstück ist in diesem V-förmigen Profil aufgenommen, sodass es dort zwischen zwei zueinander winkligen Schalenabschnitten gehalten ist. Der zwischen den Schalenabschnitten eingeschlossene Winkel ist vorzugsweise größer als 90°, insbesondere größer als 120°. Vorzugsweise ist der zwischen den Schalenabschnitten eingeschlossene Winkel kleiner als 170°, insbesondere kleiner als 160°.

Erfindungsgemäß ist vorgesehen, dass das V-förmige Profil einen ersten Schalenabschnitt umfasst, der als Auflagefläche für das Werkstück dient.

Nach einer ersten erfindungsgemäßen Alternative erstreckt sich der erste Schalenabschnitt in einer geraden Ebene, welche tangential zu dem bogenförmigen Verschwenkwegs orientiert ist. Dies vereinfacht die Herstellung der Auflageeinrichtung und ermöglicht eine weitestgehend hinterschnittfreie Relativbewegung zwischen Auflageeinrichtung und Werkstück.

Nach einer zweiten erfindungsgemäßen Alternative ist der erste Schalenabschnitt bogenförmig gekrümmt, wobei die Krümmung der Auflagefläche einen Krümmungsradius aufweist, der gleich dem Radius des Verschwenkwegs ist. Bei einer solchen Konstellation kann der erste Schalenabschnitt vollständig hinterschnittfrei relativ zu dem Werkstück bewegt werden.

Bei einer weiteren bevorzugten Ausführungsform der Erfindung ist vorgesehen, dass die Werkstücktransporteinrichtung eine lösbare Verdrehsicherungseinrichtung aufweist, mittels welcher ein auf der Auflageeinrichtung angeordnetes Werkstück gegen Verdrehen um die Werkstückachse sicherbar ist. Eine solche Verdrehsicherungseinrichtung wirkt vorzugsweise mit einem Bestandteil des Werkstücks zusammen, der bezogen auf die Werkstückachse nicht rotationssymmetrisch ist, beispielsweise mit dem Pleuellager einer Kurbelwelle. Die Verdrehsicherungseinrichtung ist insbesondere an dem Werkstückhalter und/oder an einem freien Ende des Schwenkarms befestigt, sodass die Verdrehsicherungseinrichtung gemeinsam mit dem Werkstückhalter zwischen der Arbeitsposition und der Be-/Entladeposition entlang des bogenförmigen Verschwenkwegs verschwenkbar ist.

Weitere Merkmale und Vorteile der Erfindung sind Gegenstand der nachfolgenden Beschreibung und der zeichnerischen Darstellung eines bevorzugten Ausführungsbeispiels.

In den Zeichnungen zeigen:
- Fig. 1: eine perspektivische Ansicht einer Ausführungsform einer Finishvorrichtung, mit einer Werkstücktransporteinrichtung in einer Be-/Entladeposition;
- Fig. 2: eine der Fig. 1 entsprechende Ansicht, mit der Werkstücktransporteinrichtung in einer Arbeitsposition;
- Fig. 3: eine Seitenansicht der Finishvorrichtung gemäß Fig. 1 und 2;
- Fig. 4: eine schematische Seitenansicht der Finishvorrichtung gem. Fig. 1 und 2;
- Fig. 5: eine weitere Seitenansicht der Finishvorrichtung gem. Fig. 1 und 2; mit einer aktivierten Verdrehsicherungseinrichtung; und
- Fig. 6: eine der Fig. 5 entsprechende Seitenansicht, mit einer deaktivierten Verdrehsicherungseinrichtung.

Eine in der Zeichnung dargestellte Ausführungsform einer Finishvorrichtung 10 umfasst ein Maschinengestell 12 zur Anordnung einer Werkstückaufnahmeeinrichtung 14. Diese umfasst einen Spindelstock 16 mit einem Rotationsantrieb 18 zum rotatorischen Antrieb eines Werkstücks 20 um eine Werkstückachse 22. Die Werkstückaufnahmeeinrichtung 14 umfasst ferner einen Reitstock 24.

Zur Erzeugung einer der Rotationsbewegung des Werkstücks 20 überlagerten Oszillationsbewegung, welche parallel zu der Werkstückachse 22 verläuft, ist ein Oszillationsantrieb 26 vorgesehen. Der Oszillationsantrieb dient dazu, die Werkstückaufnahmeeinrichtung 14 und das darin aufgenommene Werkstück 20 in zu der Werkstückachse paralleler Richtung hin- und herzubewegen. Ein an einer Bearbeitungseinheit 27 angeordnetes Finishwerkzeug (in der Zeichnung zur Verbesserung der Übersichtlichkeit nicht dargestellt, bspw. ein Finishband oder ein Finishstein) wird zur finishenden Bearbeitung gegen eine Oberfläche des Werkstücks 20 angedrückt. Durch die Überlagerung der Rotationsbewegung und der Oszillationsbewegung entsteht eine für das Finishverfahren charakteristische Kreuzschliffstruktur.

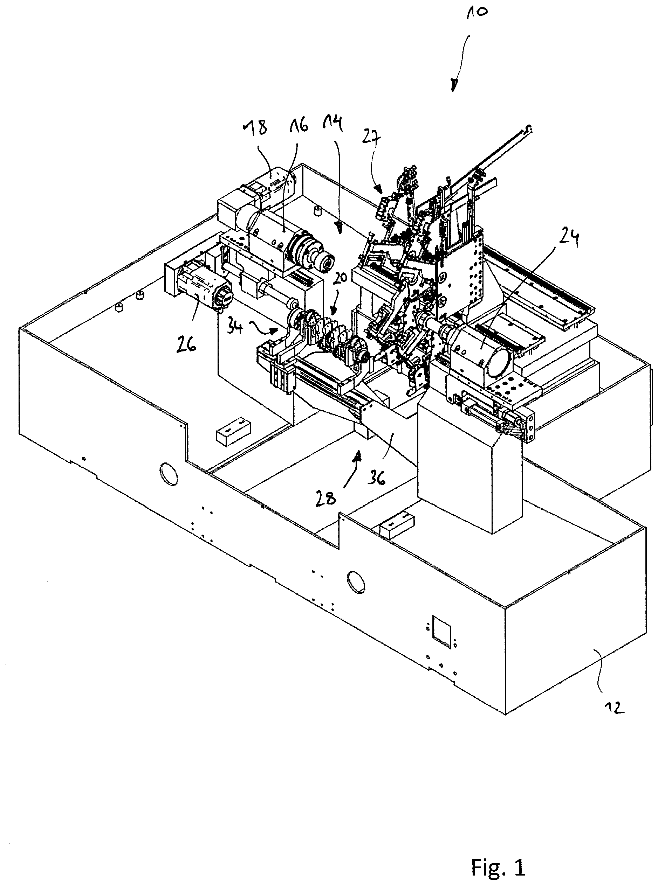

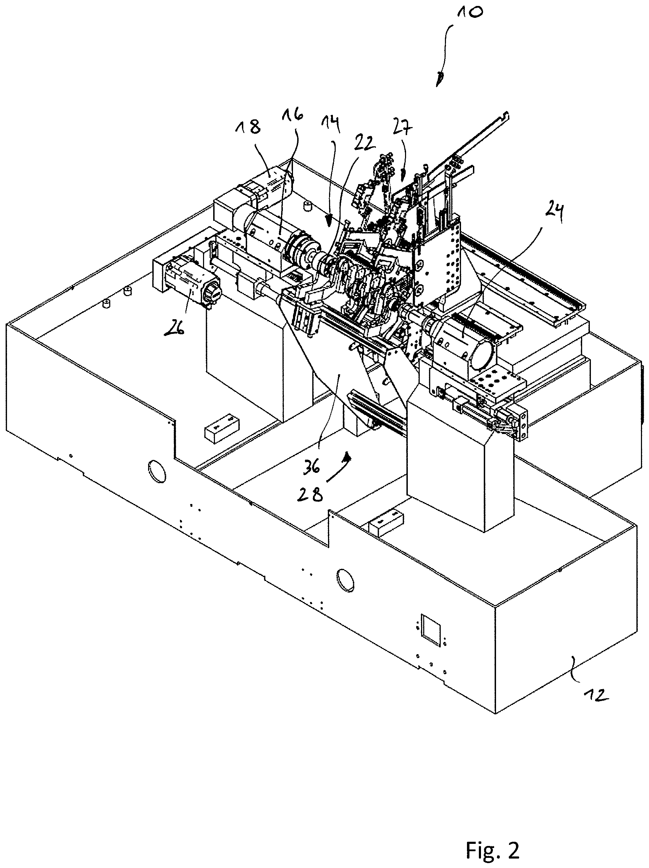

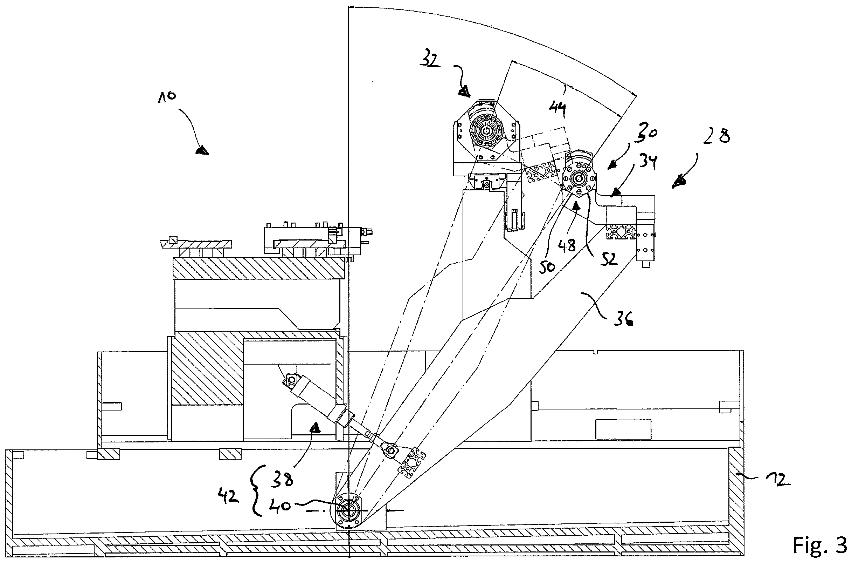

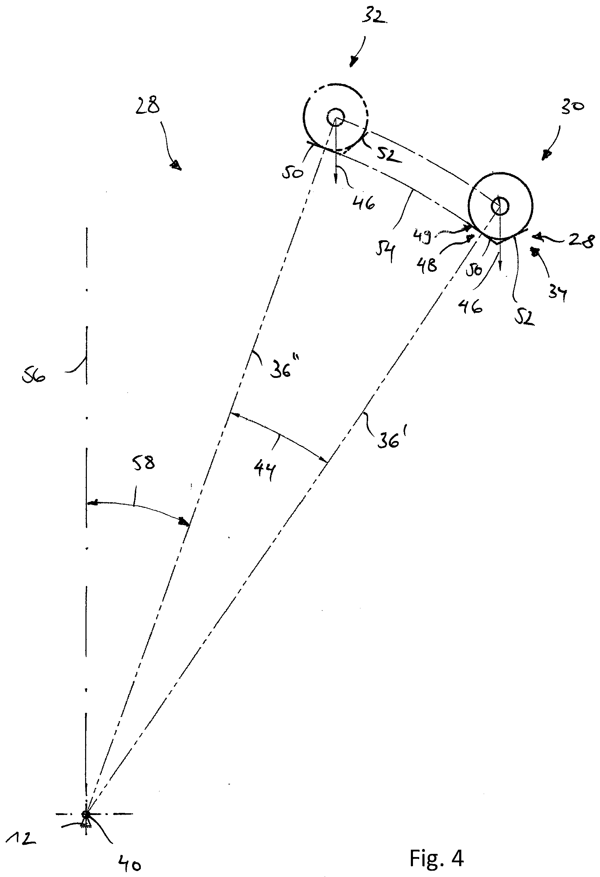

Die Finishvorrichtung 10 umfasst ferner eine Werkstücktransporteinrichtung 28 zum Transport des Werkstücks 20 zwischen einer Be-/Entladeposition (vgl. Fig. 1) und einer Arbeitsposition (vgl. Fig. 2). In den Figuren 3 und 4 sind sowohl die Be-/Entladeposition als auch die Arbeitsposition dargestellt, wobei die Be-/Entladeposition mit dem Bezugszeichen 30 und die Arbeitsposition mit dem Bezugszeichen 32 bezeichnet ist.

In der Be-/Entladeposition 30 kann ein finishend zu bearbeitendes Werkstück 20 von einem externen Magazin oder einem Portallader zugeführt und ein finishend bearbeitetes Werkstück 20 abgeführt werden. Aus der Arbeitsposition 32 heraus kann ein Werkstück 20 in an sich bekannter Weise mittels der Werkstückaufnahmeeinrichtung 14 eingespannt werden, insbesondere zwischen Spitzen des Spindelstocks 16 und des Reitstocks 24.

Die Werkstücktransporteinrichtung 28 weist einen Werkstückhalter 34 auf, der an einem Schwenkarm 36 befestigt ist. Der Schwenkarm 36 ist mittels einer Antriebseinrichtung 38 antreibbar. Dabei verschwenkt der Schwenkarm 36 zwischen einer ersten Schwenklage 36' und einer zweiten Schwenklage 36'' um eine Schwenkachse 40. Die Anordnung aus Antriebseinrichtung 38 und Schwenkachse 40 bildet einen Schwenkantrieb 42.

Im dargestellten Ausführungsbeispiel ist die Antriebseinrichtung 38 in Form eines doppelt wirkenden hydraulischen, pneumatischen oder elektrischen Zylinders gebildet, der sich einenends an dem Maschinengestell 12 und anderenends an einem zu der Schwenkachse 40 beabstandeten Abschnitt des Schwenkarms 36 abstützt. Denkbar ist aber auch, einen Drehantrieb zu verwenden, der den Schwenkarm 36 im Bereich der Schwenkachse 40 antreibt und verschwenkt.

Ein zwischen den Schwenklagen 36 und 36'' ausgebildete Schwenkwinkel 44 beträgt beispielsweise zwischen ungefähr 10° und ungefähr 70°, vorzugsweise zwischen ungefähr 10° und ungefähr 20°.

Im Zuge der Verschwenkung des Schwenkarms 36 zwischen den Schwenklagen 36' und 36'' wird der Werkstückhalter 34 zwischen der Be-/Entladeposition 30 und der Arbeitsposition 32 verschwenkt.

Der Werkstückhalter 34 weist eine Auflageeinrichtung 48 mit einer bezogen auf die Schwerkraftrichtung 46 nach oben offenen Schale 49 auf.

Die Schale 49 weist ein V-förmiges Profil auf mit einem ersten Schalenabschnitt 50, und mit einem hierzu winklig angeordneten zweiten Schalenabschnitt 52. Die Schalenabschnitte 50 und 52 bilden jeweils Auflageflächen zur Auflage des Werkstücks 20.

Der erste Schalenabschnitt 50 weist eine zu der Krümmung der Oberfläche des Werkstücks 20 gegensinnig gekrümmte Form auf. Die Krümmung des ersten Schalenabschnitts 50 ist derart, dass der Krümmungsradius des ersten Schalenabschnitts 50 mit dem Radius des Verschwenkwegs des Werkstückhalters 34 um die Schwenkachse 40 übereinstimmt. Auf diese Weise kann der erste Schalenabschnitt 50 entlang eines bogenförmigen Verschwenkwegs 54 bezogen auf das Werkstück 20 vollständig hinterschnittfrei bewegt werden. Dies gilt insbesondere dann, wenn eine bezogen auf die Schwerkraftrichtung 46 nach oben weisende Oberfläche des ersten Schalenabschnitts 50 so tief angeordnet ist, dass bei Anordnung eines Werkstücks 20 in dem Werkstückhalter 34 und Überführung des Werkstückhalter 34 aus der Be-/Entladeposition 30 in die Arbeitsposition 32 die Werkstückachse 22 des Werkstücks 20 geringfügig tiefer angeordnet ist als eine zwischen den Spitzen des Spindelstocks 16 und des Reitstocks 24 ausgebildete Spannachse. Diese Tieferpositionierung ermöglicht es, das Werkstück 20 zunächst in eine "zu tiefe" Arbeitsposition zu verbringen, um danach die Spitzen in Eingriff mit stirnseitigen Vertiefungen des Werkstücks 20 zu bringen. Im Zuge dieses Eingriffs zentrieren sich die Spitzen in den Vertiefungen und heben das zunächst noch auf dem Werkstückhalter 34 aufliegende Werkstück 20 in eine Bearbeitungsposition an, sodass dann das zwischen den Spitzen eingespannte Werkstück 20 zu dem Werkstückhalter 34 geringfügig beabstandet ist. Dies ermöglicht eine Überführung des Werkstückhalters 34 aus der Arbeitsposition 32 zurück in die Be-/Entladeposition 30, ohne dass der Werkstückhalter 34 im Zuge dieser Überführung das Werkstück 20 berührt.

Ein sicherer Halt des Werkstücks 20 an dem Werkstückhalter 34 bzw. in der Schale 49 wird auch dadurch gewährleistet, dass der gesamte Verschwenkweg 54 relativ zu einer Bezugsebene 56 seitlich versetzt angeordnet ist. Die Bezugsebene 56 erstreckt sich in vertikaler Richtung (parallel zur Schwerkraftrichtung 46) und durch die in horizontaler Richtung verlaufende Schwenkachse 40 hindurch. Der Verschwenkweg 54 ist bezogen auf die Bezugsebene 56 um einen Winkel 58 beabstandet. Der Winkel 58 beträgt vorzugsweise mindestens 10°, insbesondere mindestens 20°. Der Winkel 58 beträgt vorzugsweise maximal 80°, insbesondere maximal 70°.

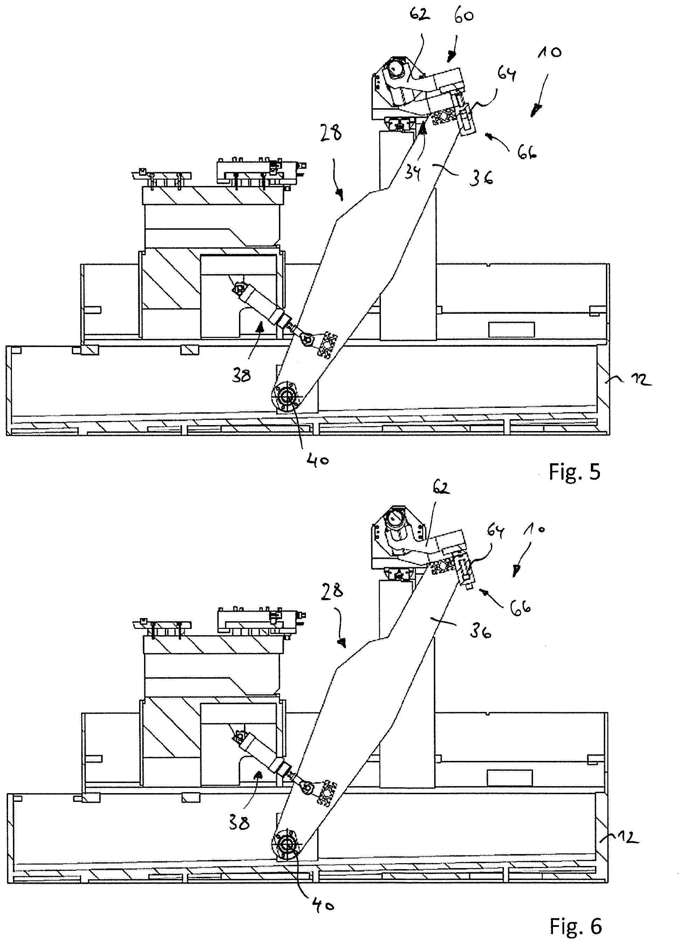

Zur Sicherung des Werkstücks 20 in einer vorbestimmten Drehlage umfasst die Werkstücktransporteinrichtung 28 eine Verdrehsicherungseinrichtung 60. Diese weist ein gabelförmiges Sicherungselement 62 auf, das mittels eines Stellantriebs 64 zwischen einer Sicherungsposition (vgl. Fig. 5) und einer Ruheposition (vgl. Fig. 6) bewegbar ist. Der Stellantrieb 64 ist an dem zu der Schwenkachse 40 beabstandeten freien Ende 66 des Schwenkarms 36 befestigt, sodass die Verdrehsicherungseinrichtung 60 gemeinsam mit mit dem Werkstückhalter 34 verschwenkt wird.

Die Werkstücktransporteinrichtung 28 ermöglicht einen einfachen und schnellen Transport eines Werkstücks 20 zwischen der Be-/Entladeposition 30 und der Arbeitsposition 32 entlang des nur einstufigen, bogenförmigen Verschwenkwegs 54.

## Patentansprüche

1. Finishvorrichtung (10), mit einer Werkstückaufnahmeeinrichtung (14), einem Rotationsantrieb (16) zum rotatorischen Antrieb eines Werkstücks (20) um eine Werkstückachse (22), einem Oszillationsantrieb (26) zur Erzeugung einer Relativbewegung zwischen Werkstück (20) und einem Finishwerkzeug in einer zu der Werkstückachse (22) parallelen Richtung, mit einer Werkstücktransporteinrichtung (28), die einen Werkstückhalter (34) aufweist, der mittels einer Antriebseinrichtung (38) zwischen einer Arbeitsposition (32) zur Bearbeitung eines Werkstücks (20) und einer Be-/Entladeposition (30) zur Bereitstellung eines zu bearbeitenden Werkstücks (20) und zur Entnahme eines bearbeiteten Werkstücks (20) bewegbar ist, wobei der Werkstückhalter (34) eine Auflageeinrichtung (48) zur Auflage eines Werkstücks (20) aufweist, wobei die Antriebseinrichtung (38) als Schwenkantrieb (42) ausgebildet ist, sodass der Werkstückhalter (34) zwischen der Arbeitsposition (32) und der Be-/Entladeposition (30) entlang eines bogenförmigen Verschwenkwegs (54) verschwenkbar ist, **dadurch gekennzeichnet, dass** die Auflageeinrichtung (48) in Form einer bezogen auf die Schwerkraftrichtung (46) nach oben zumindest teilweise offenen Schale (49) gebildet ist, wobei die Schale (49) ein V-förmiges Profil aufweist, das einen ersten Schalenabschnitt (50) umfasst, der als Auflagefläche für das Werkstück (20) dient, wobei sich der erste Schalenabschnitt (50) in einer geraden Ebene erstreckt, welche tangential zu dem bogenförmigen Verschwenkwegs (54) orientiert ist, oder wobei der erste Schalenabschnitt (50) bogenförmig gekrümmt ist und die Krümmung der Auflagefläche einen Krümmungsradius aufweist, der gleich dem Radius des Verschwenkwegs (54) ist.

2. Finishvorrichtung (10) nach Anspruch 1, **dadurch gekennzeichnet, dass** eine dem Verschwenkweg (54) zugeordnete Schwenkachse (40) in horizontaler Richtung gesehen seitlich versetzt zu dem Verschwenkweg (54) angeordnet ist.

3. Finishvorrichtung (10) nach einem der voranstehenden Ansprüche, **dadurch gekennzeichnet, dass** die Arbeitsposition (32) bezogen auf die Schwerkraftrichtung (46) höher als die Be-/Entladeposition (30) angeordnet ist.

4. Finishvorrichtung (10) nach einem der voranstehenden Ansprüche, **dadurch gekennzeichnet, dass** die Werkstücktransporteinrichtung eine lösbare Verdrehsicherungseinrichtung (62) aufweist, mittels welcher ein auf der Auflageeinrichtung (48) angeordnetes Werkstück (20) gegen Verdrehen um die Werkstückachse (22) sicherbar ist.

## Claims

1. Finishing apparatus (10), comprising a workpiece-receiving device (14), a rotary drive (16) for driving a workpiece (20) in rotation about a workpiece axis (22), an oscillatory drive (26) for producing a relative movement between the workpiece (20) and a finishing tool in a direction that is parallel to the workpiece axis (22), comprising a workpiece-conveying device (28), which has a workpiece holder (34) that can be moved by means of a drive device (38) between a working position (32) for machining a workpiece (20) and a loading/unloading position (30) for providing a workpiece (20) to be machined and for removing a machined workpiece (20), the workpiece holder (34) comprising a support device (48) for supporting a workpiece (20), wherein the drive device (38) is formed as a swivel drive (42) such that the workpiece holder (34) can be swiveled between the working position (32) and the loading/unloading position (30) along an arcuate swivel path (54), **characterized in that** the support device (48) is formed as a shell (49) that is at least partially open at the top relative to the direction of gravity (46), wherein the shell (49) has a V-shaped profile comprising a first shell portion (50), which functions as a support surface for the workpiece (20), wherein the first shell portion (50) extends in a straight plane that is oriented tangentially to the arcuate swivel path (54), or wherein the first shell portion (50) is curved in the shape of an arc and the curvature of the support surface has a radius of curvature which is equal to the radius of the swivel path (54) .

2. Finishing apparatus (10) according to claim 1, **characterized in that** a swivel axle (40) associated with the swivel path (54) is laterally offset from the swivel path (54) when viewed in the horizontal direction.

3. Finishing apparatus (10) according to any of the preceding claims, **characterized in that** the working position (32) is higher than the loading/unloading position (30) relative to the direction of gravity (46).

4. Finishing apparatus (10) according to any of the preceding claims, **characterized in that** the workpiece-conveying device comprises a releasable anti-turn device (62), by means of which a workpiece (20) arranged on the support device (48) can be secured against turning about the workpiece axis (22).

## Revendications

1. Dispositif de finition (10) comprenant un dispositif de réception de pièce (14), un mécanisme d'entrainement en rotation (16) pour entrainer en rotation une pièce (20) autour d'un axe de pièce (22), un mécanisme d'entraînement en oscillation (26) destiné à générer un mouvement relatif entre la pièce (20) et un outil de finition dans une direction parallèle à l'axe de pièce (22), un dispositif de transport de pièce (28) qui présente un porte-pièce (34) qui est déplaçable, au moyen d'un dispositif d'entraînement (38), entre une position de travail (32) pour usiner une pièce (20) et une position de chargement/déchargement (30) pour fournir une pièce (20) à usiner et pour retirer une pièce (20) usinée, dans lequel ledit porte-pièce (34) présente un dispositif d'appui (48) pour appuyer une pièce (20), dans lequel ledit dispositif d'entraînement (38) est réalisé comme entraînement pivotant (42) de sorte que le porte-pièce (34) est pivotable le long d'un chemin de pivotement (54) en arc entre la position de travail (32) et la position de chargement/déchargement (30), **caractérisé par le fait que** ledit dispositif d'appui (48) est réalisé sous forme d'une cuvette (49) qui, par rapport à la direction de pesanteur (46), est ouverte vers le haut au moins en partie, dans lequel ladite cuvette (49) présente un profil en V qui comprend une première portion de cuvette (50) qui fait fonction de surface d'appui pour la pièce (20), dans lequel la première portion de cuvette (50) s'étend dans un plan droit qui est orienté de manière tangentielle par rapport au chemin de pivotement (54) en arc, ou dans lequel la première portion de cuvette (50) est courbée en arc et la courbure de la surface d'appui présente un rayon de courbure qui est égal au rayon du chemin de pivotement (54) .

2. Dispositif de finition (10) selon la revendication 1, **caractérisé par le fait que**, vu dans la direction horizontale, un axe de pivotement (40) associé au chemin de pivotement (54) est disposé de manière à être latéralement décalé par rapport au chemin de pivotement (54) .

3. Dispositif de finition (10) selon l'une quelconque des revendications précédentes, **caractérisé par le fait que** la position de travail (32) est disposée, par rapport à la direction de pesanteur (46), à un niveau supérieur à celui de la position de chargement/déchargement (30).

4. Dispositif de finition (10) selon l'une quelconque des revendications précédentes, **caractérisé par le fait que** le dispositif de transport de pièce comprend un dispositif anti-rotation (62) amovible au moyen duquel une pièce (20) disposée sur le dispositif d'appui (48) est sécurisée contre une rotation autour de l'axe de pièce (22).
